# EUROPEAN PATENT APPLICATION

(11) **EP 4 632 243 A1**
(43) Veröffentlichungstag der Anmeldung: **15.10.2025**
(21) Anmeldenummer: 22967487.4
(22) Anmeldetag: 05.12.2022
(51) Int. Cl.: F16C 33/49, F16C 19/28

(54) **LAGER**

(71) Anmelder: Schaeffler Technologies AG & Co. KG, 91074 Herzogenaurach (DE)
(72) Erfinder: CHENG, Tao, Shanghai 201804 (CN); LIU, Jixuan, Shanghai 201804 (CN); WOLF, Simon, 97355 Kleinlangheim (DE); GODAU, Robert, 97422 Schweinfurt (DE); TREUTLEIN, Tobias, 97421 Schweinfurt (DE)
(86) Internationale Anmeldenummer: PCT/CN2022/136665
(87) Internationale Veröffentlichungsnummer: WO 2024/119324

(57) **Zusammenfassung**

Die vorliegende Anmeldung stellt ein Lager bereit, das einen Außenring, einen Innenring, Wälzkörper und einen Käfig umfasst. Der Käfig umfasst einen Grundkörperabschnitt und eine Vielzahl von Verlängerungsabschnitten, wobei der Grundkörperabschnitt ringförmig ist; die Vielzahl von Verlängerungsabschnitten an der Seitenoberfläche des Grundkörperabschnitts bereitgestellt sind, und benachbarte Verlängerungsabschnitte und ein Teil des Grundkörperabschnitts dazwischen Taschen zum Aufnehmen der Wälzkörper bilden; jeder Verlängerungsabschnitt eine erste Verlängerungssektion und eine zweite Verlängerungssektion umfasst; die erste Verlängerungssektion mit dem Grundkörperabschnitt verbunden ist; die zweite Verlängerungssektion mit der ersten Verlängerungssektion verbunden ist; und in einer Richtung vom Grundkörperabschnitt weg die radialen Außenoberflächen der ersten Verlängerungssektion und der zweiten Verlängerungssektion beide in Richtung der Mitte des Käfigs zusammengezogen sind. Unter Verwendung des Lagers der vorliegenden Anmeldung wird der Materialeinsatz an der Stirnfläche einer radialen Außenoberfläche des Käfigs in der Nähe der Verlängerungsabschnitte verringert, sodass die Wälzkörper leichter in die Taschen des Käfigs eingebaut werden können und die Gefahr einer Beschädigung beim Einbauen der Wälzkörper wirksam verringert wird; außerdem wird an anderen Stellen des Käfigs so viel Material wie möglich beibehalten, um eine Beeinträchtigung der Käfigfestigkeit zu verhindern.

## Beschreibung

### Technisches Gebiet

Die vorliegende Anmeldung betrifft das technische Gebiet der Lager. Genauer gesagt, die vorliegende Anmeldung betrifft ein Lager, das einfach zu montieren ist.

### Hintergrundtechnologie

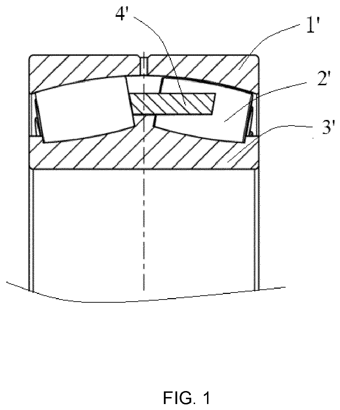

Wie in FIG. 1 dargestellt, umfasst ein Lager einen Außenring 1', einen Innenring 3', einen Käfig 4' und Wälzkörper 2'. Aufgrund der Einschränkungen durch eine Außenrippe des Innenrings und der Materialeigenschaften des Käfigs 1' können die Oberflächen der Wälzkörper 2' während der Lagermontage leicht durch den Käfig 1' beschädigt werden, wenn die Wälzkörper 2' in Taschen des Käfigs 1' eingesetzt werden.

Das Risiko einer Beschädigung der Wälzkörper 2' kann dadurch verringert werden, dass die Höhe der Außenrippe des Innenrings verringert wird, oder eine zusätzliche Montagenut kann in die Außenrippe des Innenrings gefräst werden, um das Montieren der Wälzkörper 2' zu erleichtern, ohne die Wälzkörper 2' zu beschädigen. Wenn die Höhe der Außenrippe des Innenrings verringert wird, um das Risiko einer Beschädigung der Wälzkörper 2' zu verringern, besteht aufgrund der Verringerung der Höhe der Außenrippe des Innenrings eine größere Wahrscheinlichkeit, dass die Wälzkörper 2' nach der Montage herausfallen. Wenn die Montagenut in den Außenrippen des Innenrings gefräst wird, um das Montieren der Wälzkörper 2' zu erleichtern, müssen alle diese Wälzkörper 2' durch die Montagenut in die Taschen des Käfigs eingebaut werden, was die Effizienz der Montage erheblich beeinträchtigt.

### Inhalt der Erfindung

Eine Aufgabe der vorliegenden Anmeldung besteht darin, ein Lager bereitzustellen, das das Montieren von Wälzkörpern in die Taschen eines Käfigs erleichtert und gleichzeitig das Risiko einer Beschädigung der Wälzkörper während der Montage verringert.

Gemäß der vorliegenden Anmeldung wird ein Lager bereitgestellt, das einen Außenring, einen Innenring, einen Wälzkörper und einen Käfig umfasst, wobei der Käfig Folgendes umfasst:
einen Grundkörperabschnitt, der ringförmig ist; und
mehrere Verlängerungsabschnitte, die an einer Seitenoberfläche des Grundkörperabschnitts angeordnet sind, wobei eine Tasche zum Aufnehmen des Wälzkörpers durch zwei der Verlängerungsabschnitte, die nebeneinander angeordnet sind, und einen Teil des Grundkörperabschnitts zwischen den beiden der Verlängerungsabschnitte definiert ist; und
jeder der Verlängerungsabschnitte eine erste Verlängerungssektion und eine zweite Verlängerungssektion umfasst, wobei die erste Verlängerungssektion mit dem Grundkörperabschnitt verbunden ist und die zweite Verlängerungssektion mit der ersten Verlängerungssektion verbunden ist, und sich die äußeren radialen Oberflächen der ersten Verlängerungssektion und der zweiten Verlängerungssektion beide in Richtung einer Mitte des Käfigs in einer Richtung vom Grundkörperabschnitt weg verjüngen.

Gemäß einer Ausführungsform der vorliegenden Anmeldung ist an derselben radialen Sektion das Profil der äußeren radialen Oberfläche der ersten Verlängerungssektion eine Kurve oder eine gerade Linie, und das Profil der äußeren radialen Oberfläche der zweiten Verlängerungssektion ist eine Kurve oder eine gerade Linie.

Gemäß einer Ausführungsform der vorliegenden Anmeldung bilden das Profil der äußeren radialen Oberfläche der ersten Verlängerungssektion und das Profil der äußeren radialen Oberfläche der zweiten Verlängerungssektion eine komplette Kurve.

Gemäß einer Ausführungsform der vorliegenden Anmeldung wird der Endpunkt des Profils einer äußeren radialen Oberfläche des Grundkörperabschnitts abseits des Verlängerungsabschnitts durch P1' dargestellt, der Schnittpunkt des Profils der äußeren radialen Oberfläche des Grundkörperabschnitts und des Profils der äußeren radialen Oberfläche der ersten Verlängerungssektion wird durch P2' dargestellt, der Schnittpunkt des Profils der äußeren radialen Oberfläche der ersten Verlängerungssektion und des Profils der äußeren radialen Oberfläche der zweiten Verlängerungssektion wird durch P3' dargestellt, und der Endpunkt des Profils der äußeren radialen Oberfläche der zweiten Verlängerungssektion abseits des Grundkörperabschnitts wird durch P4' dargestellt,
wobei der Winkel zwischen der Linie, die P2' und P3' verbindet, und dem Profil der äußeren radialen Oberfläche des Grundkörperabschnitts kleiner ist als der Winkel zwischen der Linie, die P3' und P4' verbindet, und dem Profil der äußeren radialen Oberfläche des Grundkörperabschnitts.

Gemäß einer Ausführungsform der vorliegenden Anwendung ist ein Kreis auf die Mitte des Käfigs zentriert und verläuft durch P2', und P1', P3' und P4', die alle innerhalb des Kreises liegen.

Gemäß einer Ausführungsform der vorliegenden Anmeldung schließt der Verlängerungsabschnitt ferner eine dritte Verlängerungssektion ein, die mit der zweiten Verlängerungssektion verbunden ist, und eine äußere radiale Oberfläche der dritten Verlängerungssektion erstreckt sich von einem freien Ende der zweiten Verlängerungssektion und verengt sich in Richtung der Mitte des Käfigs in Richtung vom Grundkörperabschnitt weg.

Gemäß einer Ausführungsform der vorliegenden Anmeldung ist an derselben radialen Sektion das Profil der äußeren radialen Oberfläche der ersten Verlängerungssektion eine Kurve oder eine gerade Linie, das Profil der äußeren radialen Oberfläche der zweiten Verlängerungssektion ist eine Kurve oder eine gerade Linie, und das Profil der äußeren radialen Oberfläche der dritten Verlängerungssektion ist eine Kurve oder eine gerade Linie.

Gemäß einer Ausführungsform der vorliegenden Anmeldung bilden das Profil der äußeren radialen Oberfläche der ersten Verlängerungssektion, das Profil der äußeren radialen Oberfläche der zweiten Verlängerungssektion und das Profil der äußeren radialen Oberfläche der dritten Verlängerungssektion eine komplette Kurve.

Gemäß einer Ausführungsform der vorliegenden Anmeldung ist der Verlängerungsabschnitt an jeder der beiden Seitenoberflächen des Grundkörperabschnitts bereitgestellt.

Gemäß einer Ausführungsform der vorliegenden Anmeldung wird der Mittelpunkt des Profils der äußeren radialen Oberfläche des Grundkörperabschnitts durch P1 dargestellt, und auf einer beliebigen der beiden Seitenoberflächen des Grundkörperabschnitts wird der Schnittpunkt des Profils der äußeren radialen Oberfläche des Grundkörperabschnitts und des Profils der äußeren radialen Oberfläche der ersten Verlängerungssektion durch P2 dargestellt, der Schnittpunkt des Profils der äußeren radialen Oberfläche der ersten Verlängerungssektion und des Profils der äußeren radialen Oberfläche der zweiten Verlängerungssektion wird durch P3 dargestellt, und der Endpunkt des Profils der äußeren radialen Oberfläche der zweiten Verlängerungssektion abseits des Grundkörperabschnitts wird durch P4 dargestellt,
wobei der Winkel zwischen der Linie, die P2 und P3 verbindet, und dem Profil der äußeren radialen Oberfläche des Grundkörperabschnitts kleiner ist als der Winkel zwischen der Linie, die P3 und P4 verbindet, und dem Profil der äußeren radialen Oberfläche des Grundkörperabschnitts.

Bei dem Lager gemäß der vorliegenden Anmeldung umfasst der Verlängerungsabschnitt die erste Verlängerungssektion und die zweite Verlängerungssektion, und die äußeren radialen Oberflächen der ersten Verlängerungssektion und der zweiten Verlängerungssektion verengen sich beide in Richtung der Mitte des Käfigs in Richtung vom Grundkörperabschnitt weg. Auf diese Weise wird der Materialverbrauch an der radial äußeren Oberfläche des Käfigs nahe der Stirnfläche des Verlängerungsabschnitts wirksam verringert, wodurch das Einbauen des Wälzkörpers in die Tasche des Käfigs erleichtert wird und das Risiko einer Beschädigung während der Montage des Wälzkörpers wirksam verringert wird. Darüber hinaus kann das Material anderer Teile des Käfigs maximal erhalten bleiben, um die Festigkeit des Käfigs nicht zu beeinträchtigen.

### KURZBESCHREIBUNG DER ZEICHNUNGEN

FIG. 1 ist eine Strukturansicht eines Lagers gemäß dem Stand der Technik;
FIG. 2 ist eine Strukturansicht eines Lagers gemäß einer Ausführungsform der vorliegenden Anmeldung;
FIG. 3 ist eine vergrößerte Ansicht eines Lagers gemäß einer Ausführungsform der vorliegenden Anmeldung; und
FIG. 4 ist eine vergrößerte Ansicht eines Lagers gemäß einer weiteren Ausführungsform der vorliegenden Anmeldung.

### Konkreter Modus einer Ausführungsform

Der konkrete Modus einer Ausführungsform gemäß der vorliegenden Anmeldung wird nachstehend in Verbindung mit den beigefügten Zeichnungen beschrieben. Die folgende ausführliche Beschreibung und die Zeichnungen sollen das Prinzip der vorliegenden Anmeldung exemplarisch veranschaulichen, wobei die vorliegende Anmeldung nicht auf die beschriebenen bevorzugten Ausführungsformen beschränkt ist und der Schutzumfang der vorliegenden Anmeldung durch die Ansprüche definiert ist.

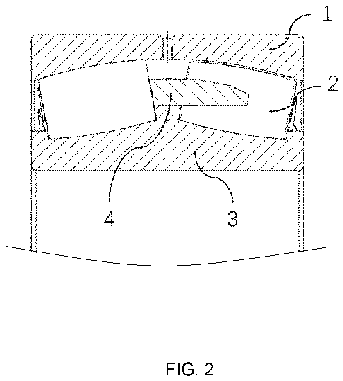

Wie in den FIGS 2 bis 4 gezeigt, wird ein Lager gemäß einer Ausführungsform der vorliegenden Anmeldung bereitgestellt. Das Lager umfasst einen Außenring 1, einen Innenring 3, einen Wälzkörper 2 und einen Käfig 4. Der Käfig 4 umfasst einen Grundkörperabschnitt 41 und mehrere Verlängerungsabschnitte 42, die sich vom Grundkörperabschnitt 41 erstrecken. Der Grundkörperabschnitt 41 und die Verlängerungsabschnitte 42 sind aus demselben Material hergestellt. In einer Ausführungsform sind der Grundkörperabschnitt 41 und die Verlängerungsabschnitte 42 als ein einziges Stück integriert, das heißt, der Käfig 4 hat eine integrale Struktur.

Der Grundkörperabschnitt 41 ist der Grundkörper des Käfigs 4 und hat eine ringförmige Form. Die mehreren Verlängerungsabschnitte 42 sind an einer Seitenoberfläche des Grundkörperabschnitts 41 angeordnet, das heißt, die mehreren Verlängerungsabschnitte 42 erstrecken sich von der Seitenoberfläche des Grundkörperabschnitts 41 nach außen. Hierbei erstrecken sich die mehreren Verlängerungsabschnitte 42 von einer axialen Seitenoberfläche des Grundkörperabschnitts 41 nach außen. Eine Tasche zum Aufnehmen des Wälzkörpers 2 ist durch zwei der Verlängerungsabschnitte 42, die einander benachbart sind, und den Teil des Grundkörperabschnitts 41 zwischen den beiden Verlängerungsabschnitten 42 definiert. Der Wälzkörper 2 ist in der Tasche montiert, und der Käfig 4 dient zum Halten des Wälzkörpers 2 in der Tasche. Der Käfig 4 und die Wälzkörper 2 sind zwischen dem Innenring 3 und dem Außenring 1 angeordnet.

Jeder der Verlängerungsabschnitte 42 umfasst eine erste Verlängerungssektion 421 und eine zweite Verlängerungssektion 422. Die erste Verlängerungssektion 421 ist mit dem Grundkörperabschnitt 41 verbunden, und die zweite Verlängerungssektion 422 ist mit der ersten Verlängerungssektion 421 verbunden. Die äußeren radialen Oberflächen der ersten Verlängerungssektion 421 und der zweiten Verlängerungssektion 422 verengen sich beide in Richtung der Mitte des Käfigs 4 in einer Richtung vom Grundkörperabschnitt 41 weg, das heißt, der Verlängerungsabschnitt 42 ist segmentiert. Die erste Verlängerungssektion 421 und die zweite Verlängerungssektion 422 sind integral ausgebildet. Ein Ende der ersten Verlängerungssektion 421 ist mit dem Grundkörperabschnitt 41 verbunden, und das andere Ende der ersten Verlängerungssektion 421 ist mit der zweiten Verlängerungssektion 422 verbunden. Ein Ende der zweiten Verlängerungssektion 422 ist mit der ersten Verlängerungssektion 421 verbunden, und das andere Ende der zweiten Verlängerungssektion 422 ist ein hängendes Ende.

Das heißt, die äußere radiale Oberfläche des Käfigs 4 besteht aus drei Profilen, d. h. den Profilen des Grundkörperabschnitts 41, der ersten Verlängerungssektion 421 und der zweiten Verlängerungssektion 422. Die äußere radiale Oberfläche des Grundkörperabschnitts 41 ist zylindrisch. Die äußeren radialen Oberflächen der ersten Verlängerungssektion 421 und der zweiten Verlängerungssektion 422 verengen sich beide zur Mitte des Käfigs 4 in der Richtung weg von Grundkörperabschnitt 41, sodass der Durchmesser der äußeren radialen Oberfläche des Verlängerungsabschnitts 42 in axialer Richtung abnimmt. Bei einem Beispiel ist die äußere radiale Oberfläche des Grundkörperabschnitts 41 zylindrisch. Alternativ kann die äußere radiale Oberfläche des Grundkörperabschnitts 41 eine konische Oberfläche mit einer bestimmten Neigung oder eine gekrümmte Oberfläche sein. Die äußere radiale Oberfläche der ersten Verlängerungssektion 421 verengt sich in Richtung der Mitte des Käfigs 4 in Richtung vom Grundkörperabschnitt 41 weg, relativ zur äußeren radialen Oberfläche des Grundkörperabschnitts 41.

Bei dem Lager gemäß der vorliegenden Anmeldung umfasst der Verlängerungsabschnitt 42 des Käfigs 4 die erste Verlängerungssektion 421 und die zweite Verlängerungssektion 422, und die äußeren radialen Oberflächen der ersten Verlängerungssektion 421 und der zweiten Verlängerungssektion 422 verengen sich beide in Richtung der Mitte des Käfigs 4 in Richtung vom Grundkörperabschnitt 41 weg. Auf diese Weise wird der Materialverbrauch an der radial äußeren Oberfläche des Käfigs 4 nahe der Stirnfläche des Verlängerungsabschnitts 42 wirksam verringert, wodurch das Einbauen des Wälzkörpers 2 in die Tasche 4 des Käfigs erleichtert wird und das Risiko einer Beschädigung während der Montage des Wälzkörpers 2 wirksam verringert wird. Zudem kann das Material anderer Teile des Käfigs 4 maximal erhalten bleiben, um die Festigkeit des Käfigs 4 nicht zu beeinträchtigen. Darüber hinaus ist es bei dem Lager gemäß der vorliegenden Anmeldung möglich, das Herausfallen des Wälzkörpers 2 aus der Tasche des Käfigs 4 zu verringern und gleichzeitig eine Beschädigung des Wälzkörpers 2 beim Einbauen des Wälzkörpers 2 in den Käfig 4 zu vermeiden. Des Weiteren muss keine zusätzliche Montagenut gefräst werden, sodass der Zusammenbau bequemer ist und die Effizienz beim Zusammenbauen verbessert wird.

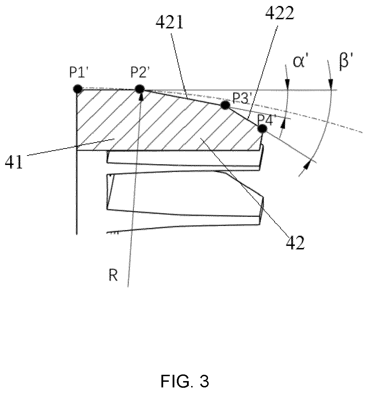

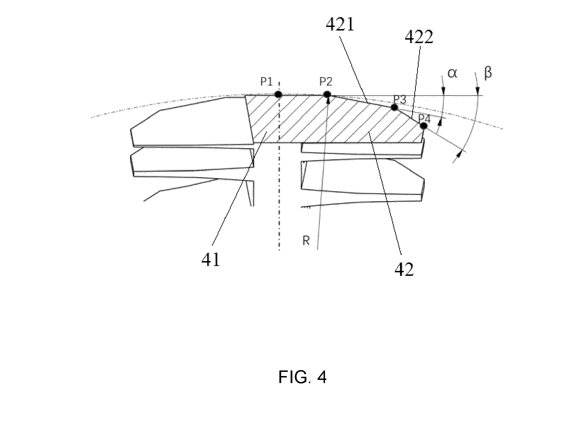

An einer gleichen radialen Sektion ist das Profil der äußeren radialen Oberfläche der ersten Verlängerungssektion 421 eine Kurve oder eine gerade Linie, und das Profil der äußeren radialen Oberfläche der zweiten Verlängerungssektion 422 ist eine Kurve oder eine gerade Linie. Wie in den FIGS 3 und 4 dargestellt, ist das Profil der äußeren radialen Oberfläche der ersten Verlängerungssektion 421 eine gerade Linie, und das Profil der äußeren radialen Oberfläche der zweiten Verlängerungssektion 422 ist eine gerade Linie. Das heißt, die äußere radiale Oberfläche der ersten Verlängerungssektion 421 und die äußere radiale Oberfläche der zweiten Verlängerungssektion 422 sind konische Oberflächen, die sich zur Mitte des Käfigs 4 hin verengen. Die beiden Sektionen sind in unterschiedlichem Ausmaß geneigt. Die zweite Verlängerungssektion 422 ist zur Mitte des Käfigs 4 hin stärker geneigt.

Das Profil der äußeren radialen Oberfläche der ersten Verlängerungssektion 421 und das Profil der äußeren radialen Oberfläche der zweiten Verlängerungssektion 422 bilden eine komplette Kurve. Auf diese Weise ergibt sich ein sanfterer Übergang zwischen der äußeren radialen Oberfläche der ersten Verlängerungssektion 421 und äußeren radialen Oberfläche der zweiten Verlängerungssektion 422.

Gemäß einer Ausführungsform der vorliegenden Anmeldung ist der Verlängerungsabschnitt 42 nur auf einer Seitenoberfläche des Grundkörperabschnitts 41 bereitgestellt. In diesem Fall ist der Käfig 4 ein einreihiger Käfig, siehe FIG. 3 als Beispiel.

Für den Fall, dass der Verlängerungsabschnitt 42 nur auf einer Seitenoberfläche des Grundkörperabschnitts 41 bereitgestellt ist, wird der Endpunkt des Profils der äußeren radialen Oberfläche des Grundkörperabschnitts 41 abseits des Verlängerungsabschnitts 42 durch P1' dargestellt, der Schnittpunkt des Profils der äußeren radialen Oberfläche des Grundkörperabschnitts 41 und des Profils der äußeren radialen Oberfläche der ersten Verlängerungssektion 421 wird durch P2' dargestellt, der Schnittpunkt des Profils der äußeren radialen Oberfläche der ersten Verlängerungssektion 421 und des Profils der äußeren radialen Oberfläche der zweiten Verlängerungssektion 422 wird durch P3' dargestellt, und der Endpunkt des Profils der äußeren radialen Oberfläche der zweiten Verlängerungssektion 422 abseits des Grundkörperabschnitts 41 wird durch P4' dargestellt.

Wobei der Winkel zwischen der Linie, die P2' und P3' verbindet, und dem Profil der äußeren radialen Oberfläche des Grundkörperabschnitts 41 kleiner ist als der Winkel zwischen der Linie, die P3' und P4' verbindet, und dem Profil der äußeren radialen Oberfläche des Grundkörperabschnitts 41. Wie in FIG. 3 dargestellt, wird der Winkel zwischen der Linie, die P2' und P3' verbindet, und dem Profil der äußeren radialen Oberfläche des Grundkörperabschnitts 41 durch α' dargestellt, und der Winkel zwischen der Linie, die P3' und P4' verbindet, und dem Profil der äußeren radialen Oberfläche des Grundkörperabschnitts 41 wird durch β' dargestellt, wobei α' < β'. Das heißt, die zweite Verlängerungssektion 422 verjüngt sich zur Mitte des Käfigs 4 hin stärker.

Ein Kreis ist auf die Mitte des Käfigs 4 zentriert und verläuft durch P2', und P1', P3' und P4' liegen alle innerhalb des Kreises. Wie in FIG. 3 dargestellt, ist ein Kreis mit einem Radius R ausgebildet, der auf die Mitte des Käfigs 4 zentriert ist und durch P2' verläuft. P1', P3' und P4' befinden sich alle innerhalb dieses Kreises mit dem Radius R, um die Montage des Käfigs 4 innerhalb des Außenrings 1 zu erleichtern.

Ferner umfasst der Verlängerungsabschnitt 42 eine dritte Verlängerungssektion, die mit der zweiten Verlängerungssektion 422 verbunden ist. Die äußere radiale Oberfläche der dritten Verlängerungssektion erstreckt sich vom hängenden Ende der zweiten Verlängerungssektion 422 und verengt sich in Richtung der Mitte des Käfigs 4 in Richtung vom Grundkörperabschnitt 41 weg. Das heißt, der Verlängerungsabschnitt 42 beinhaltet die erste Verlängerungssektion 421, die zweite Verlängerungssektion 422 und die dritte Verlängerungssektion. Die erste Verlängerungssektion 421 und die zweite Verlängerungssektion 422 sind integral ausgebildet. Ein Ende der ersten Verlängerungssektion 421 ist mit dem Grundkörperabschnitt 41 verbunden, und das andere Ende der ersten Verlängerungssektion 421 ist mit der zweiten Verlängerungssektion 422 verbunden. Ein Ende der zweiten Verlängerungssektion 422 ist mit der ersten Verlängerungssektion 421 verbunden, und das andere Ende der zweiten Verlängerungssektion 422 ist mit der dritten Verlängerungssektion verbunden. Ein Ende der dritten Verlängerungssektion ist mit der zweiten Verlängerungssektion 422 verbunden, und das andere Ende der dritten Verlängerungssektion ist ein hängendes Ende.

Das heißt, die äußere radiale Oberfläche des Käfigs 4 besteht aus vier Profilen, d. h. den Profilen des Grundkörperabschnitts 41, der ersten Verlängerungssektion 421, der zweiten Verlängerungssektion 422 und der dritten Verlängerungssektion. Alle äußeren radialen Oberflächen der ersten Verlängerungssektion 421, der zweiten Verlängerungssektion 422 und der dritten Verlängerungssektion verengen sich zur Mitte des Käfigs 4 hin in Richtung vom Grundkörperabschnitt 41 weg, sodass der Durchmesser der äußeren radialen Oberfläche des Verlängerungsabschnitts 42 in axialer Richtung abnimmt.

Bei dem Lager gemäß der vorliegenden Anmeldung umfasst der Verlängerungsabschnitt 42 des Käfigs 4 die erste Verlängerungssektion 421, die zweite Verlängerungssektion 422 und die dritte Verlängerungssektion, und alle äußeren radialen Oberflächen der ersten Verlängerungssektion 421, der zweiten Verlängerungssektion 422 und der dritten Verlängerungssektion verengen sich in Richtung der Mitte des Käfigs 4 in Richtung vom Grundkörperabschnitt 41 weg. Auf diese Weise wird der Materialverbrauch der radial äußeren Oberfläche des Käfigs 4 nahe einer Stirnfläche des Verlängerungsabschnitts 42 weiter wirksam verringert, wodurch das Einbauen des Wälzkörpers 2 in die Tasche des Käfigs 4 erleichtert wird und das Risiko einer Beschädigung während der Montage des Wälzkörpers 2 wirksam verringert wird. Zudem kann das Material anderer Teile des Käfigs 4 maximal erhalten bleiben, um die Festigkeit des Käfigs 4 nicht zu beeinträchtigen. Darüber hinaus ist es bei dem Lager gemäß der vorliegenden Anmeldung möglich, das Herausfallen des Wälzkörpers 2 aus der Tasche des Käfigs 4 zu verringern und gleichzeitig eine Beschädigung des Wälzkörpers 2 beim Einbauen des Wälzkörpers 2 in den Käfig 4 zu vermeiden. Des Weiteren muss keine zusätzliche Montagenut gefräst werden, sodass der Zusammenbau bequemer ist und die Effizienz beim Zusammenbauen verbessert wird.

An derselben radialen Sektion ist das Profil der äußeren radialen Oberfläche der ersten Verlängerungssektion 421 eine Kurve oder eine gerade Linie, das Profil der äußeren radialen Oberfläche der zweiten Verlängerungssektion 422 ist eine Kurve oder eine gerade Linie, und das Profil der äußeren radialen Oberfläche der dritten Verlängerungssektion ist eine Kurve oder eine gerade Linie.

Das Profil der äußeren radialen Oberfläche der ersten Verlängerungssektion 421, das Profil der äußeren radialen Oberfläche der zweiten Verlängerungssektion 422 und das Profil der äußeren radialen Oberfläche der dritten Verlängerungssektion bilden eine komplette Kurve. Auf diese Weise ergeben sich sanftere Übergänge zwischen der äußeren radialen Oberfläche der ersten Verlängerungssektion 421, der äußeren radialen Oberfläche der zweiten Verlängerungssektion 422 und der äußeren radialen Oberfläche der dritten Verlängerungssektion.

Zudem nehmen die Ausmaße sequenziell zu, in denen sich die äußere radiale Oberfläche der ersten Verlängerungssektion 421, die äußere radiale Oberfläche der zweiten Verlängerungssektion 422 und die äußere radiale Oberfläche der dritten Verlängerungssektion in Richtung der Mitte des Käfigs 4 hin verengen. Auf diese Weise wird das Material der äußeren radialen Oberfläche des Käfigs 4 nahe der Stirnfläche des Verlängerungsabschnitts 42 weiter wirksam verringert, wodurch das Einbauen des Wälzkörpers 2 in die Tasche des Käfigs erleichtert wird und das Risiko einer Beschädigung während der Montage des Wälzkörpers 2 wirksam verringert wird. Zudem kann das Material anderer Teile des Käfigs 4 maximal erhalten bleiben, um die Festigkeit des Käfigs 4 nicht zu beeinträchtigen.

Gemäß einer Ausführungsform der vorliegenden Anmeldung ist der Verlängerungsabschnitt 42 an jeder der beiden Seitenoberflächen des Grundkörperabschnitts 41 bereitgestellt. In diesem Fall ist der Käfig 4 ein doppelreihiger Käfig, siehe FIG. 4 als Beispiel. Eine Seitenoberfläche des Grundkörperabschnitts 41 ist mit mehreren Verlängerungsabschnitten 42 versehen, und die gegenüberliegende Seitenoberfläche des Grundkörperabschnitts 41 ist mit mehreren Verlängerungsabschnitten 42 versehen. Die beiden Sätze von Verlängerungsabschnitten 42 nutzen den Grundkörperabschnitt 41 gemeinsam.

Für den Fall, dass der Verlängerungsabschnitt 42 an jeder der beiden Seitenoberflächen des Grundkörperabschnitts 41 bereitgestellt ist, wird der Mittelpunkt des Profils der äußeren radialen Oberfläche des Grundkörperabschnitts 41 durch P1 dargestellt. An jeder der beiden Seitenoberflächen wird der Schnittpunkt des Profils der äußeren radialen Oberfläche des Grundkörperabschnitts 41 und des Profils der äußeren radialen Oberfläche der ersten Verlängerungssektion 421 durch P2 dargestellt, der Schnittpunkt des Profils der äußeren radialen Oberfläche der ersten Verlängerungssektion 421 und des Profils der äußeren radialen Oberfläche der zweiten Verlängerungssektion 422 wird durch P3 dargestellt, und der Endpunkt des Profils der äußeren radialen Oberfläche der zweiten Verlängerungssektion 422 abseits des Grundkörperabschnitts 41 wird durch P4 dargestellt.

Der Winkel zwischen der Linie, die P2' und P3' verbindet, und dem Profil der äußeren radialen Oberfläche des Grundkörperabschnitts 41 ist kleiner als der Winkel zwischen der Linie, die P3' und P4' verbindet, und dem Profil der äußeren radialen Oberfläche des Grundkörperabschnitts 41. Wie in FIG. 4 gezeigt, wird der Winkel zwischen der Linie, die P2 und P3 verbindet, und dem Profil der äußeren radialen Oberfläche des Grundkörperabschnitts 41 durch α dargestellt, und der Winkel zwischen der Linie, die P3 und P4 verbindet, und dem Profil der äußeren radialen Oberfläche des Grundkörperabschnitts 41 wird durch β dargestellt, wobei α < β. Das heißt, die zweite Verlängerungssektion 422 verjüngt sich zur Mitte des Käfigs 4 hin stärker.

Ein Kreis ist auf die Mitte des Käfigs 4 zentriert und verläuft durch P2, und P1, P3 und P4 liegen alle innerhalb des Kreises. Wie in den FIG. 4 gezeigt, ist ein Kreis mit einem Radius R ausgebildet, der auf die Mitte des Käfigs 4 zentriert ist und durch P2 verläuft. P1, P3 und P4 befinden sich alle innerhalb dieses Kreises mit dem Radius R, um die Montage des Käfigs 4 innerhalb des Außenrings 1 zu erleichtern.

Das Lager gemäß der Ausführungsform der vorliegenden Anmeldung kann ein Pendelrollenlager oder ein anderer Lagertyp sein, der den Käfig 4 zum Montieren des Wälzkörpers 2 erfordert.

Wie vorstehend beschrieben, sind die exemplarischen Ausführungsformen der vorliegenden Anmeldung zwar in der Patentschrift unter Bezugnahme auf die beigefügten Zeichnungen beschrieben, die Anmeldung ist jedoch nicht auf die vorstehend genannten konkreten Implementierungen beschränkt. Der Schutzumfang der vorliegenden Anmeldung ist durch die Ansprüche und deren Äquivalente definiert.

### Liste der Bezugszeichen

| | |
|---|---|
| Außenring | 1, 1' |
| Wälzkörper | 2, 2' |
| Innenring | 3, 3' |
| Käfig | 4, 4' |
| Grundkörperabschnitt | 41 |
| Verlängerungsabschnitt | 42 |
| Erste Verlängerungssektion | 421 |
| Zweite Verlängerungssektion | 422 |

## Patentansprüche

1. Lager, das einen Außenring (1), einen Innenring (3), einen Wälzkörper (2) und einen Käfig (4) umfasst, wobei der Käfig (4) Folgendes umfasst:
einen Grundkörperabschnitt (41), der ringförmig ist; und
eine Vielzahl von Verlängerungsabschnitten (42), die an einer Seitenoberfläche des Hauptkörperabschnitts (41) angeordnet sind, wobei eine Tasche zum Aufnehmen des Wälzkörpers (2) durch zwei der Verlängerungsabschnitte (42), die nebeneinander angeordnet sind, und einen Teil des Hauptkörperabschnitts (41) zwischen den beiden der Verlängerungsabschnitte (42) definiert ist; und
jeder der Verlängerungsabschnitte (42) eine erste Verlängerungssektion (421) und eine zweite Verlängerungssektion (422) umfasst, wobei die erste Verlängerungssektion (421) mit dem Grundkörperabschnitt (41) verbunden ist, die zweite Verlängerungssektion (422) mit der ersten Verlängerungssektion (421) verbunden ist und sich die äußeren radialen Oberflächen der ersten Verlängerungssektion (421) und der zweiten Verlängerungssektion (422) beide in Richtung einer Mitte des Käfigs (4) in einer Richtung vom Grundkörperabschnitt (41) weg verjüngen.

2. Lager nach Anspruch 1, wobei an einer gleichen radialen Sektion das Profil der äußeren radialen Oberfläche der ersten Verlängerungssektion (421) eine Kurve oder eine gerade Linie ist und das Profil der äußeren radialen Oberfläche der zweiten Verlängerungssektion (422) eine Kurve oder eine gerade Linie ist.

3. Lager nach Anspruch 2, wobei das Profil der äußeren radialen Oberfläche der ersten Verlängerungssektion (421) und das Profil der äußeren radialen Oberfläche der zweiten Verlängerungssektion (422) eine komplette Kurve bilden.

4. Lager nach Anspruch 1, wobei der Endpunkt des Profils einer äußeren radialen Oberfläche des Grundkörperabschnitts (41) abseits des Verlängerungsabschnitts (42) durch P1' dargestellt wird, der Schnittpunkt des Profils der äußeren radialen Oberfläche des Grundkörperabschnitts (41) und des Profils der äußeren radialen Oberfläche der ersten Verlängerungssektion (421) durch P2' dargestellt wird, der Schnittpunkt des Profils der äußeren radialen Oberfläche der ersten Verlängerungssektion (421) und des Profils der äußeren radialen Oberfläche der zweiten Verlängerungssektion (422) durch P3' dargestellt wird, und der Endpunkt des Profils der äußeren radialen Oberfläche der zweiten Verlängerungssektion (422) abseits des Grundkörperabschnitts (41) durch P4' dargestellt wird; und
der Winkel zwischen der Linie, die P2' und P3' verbindet, und dem Profil der äußeren radialen Oberfläche des Grundkörperabschnitts (41) kleiner ist als der Winkel zwischen der Linie, die P3' und P4' verbindet, und dem Profil der äußeren radialen Oberfläche des Grundkörperabschnitts (41).

5. Lager nach Anspruch 4, wobei ein Kreis auf die Mitte des Käfigs (4) zentriert ist und durch P2' verläuft und wobei P1', P3' und P4' alle innerhalb des Kreises liegen.

6. Lager nach Anspruch 1, wobei der Verlängerungsabschnitt (42) ferner eine dritte Verlängerungssektion umfasst, die mit der zweiten Verlängerungssektion (422) verbunden ist, und sich eine äußere radiale Oberfläche der dritten Verlängerungssektion von einem hängenden Ende der zweiten Verlängerungssektion (422) erstreckt und sich in Richtung der Mitte des Käfigs (4) in Richtung vom Grundkörperabschnitt (41) weg verengt.

7. Lager nach Anspruch 6, wobei an einer gleichen radialen Sektion das Profil der äußeren radialen Oberfläche der ersten Verlängerungssektion (421) eine Kurve oder eine gerade Linie ist, das Profil der äußeren radialen Oberfläche der zweiten Verlängerungssektion (422) eine Kurve oder eine gerade Linie ist und das Profil der äußeren radialen Oberfläche der dritten Verlängerungssektion eine Kurve oder eine gerade Linie ist.

8. Lager nach Anspruch 7, wobei das Profil der äußeren radialen Oberfläche der ersten Verlängerungssektion (421), das Profil der äußeren radialen Oberfläche der zweiten Verlängerungssektion (422) und das Profil der äußeren radialen Oberfläche der dritten Verlängerungssektion eine komplette Kurve bilden.

9. Lager nach Anspruch 1, wobei der Verlängerungsabschnitt (42) an jeder der beiden Seitenoberflächen des Grundkörperabschnitts (41) bereitgestellt ist.

10. Lager nach Anspruch 9, wobei der Mittelpunkt des Profils einer äußeren radialen Oberfläche des Grundkörperabschnitts (41) durch P1 dargestellt wird; an einer beliebigen der beiden Seitenoberflächen des Grundkörperabschnitts (41) der Schnittpunkt des Profils der äußeren radialen Oberfläche des Grundkörperabschnitts (41) und des Profils der äußeren radialen Oberfläche der ersten Verlängerungssektion (421) durch P2 dargestellt wird, der Schnittpunkt des Profils der äußeren radialen Oberfläche der ersten Verlängerungssektion (421) und des Profils der äußeren radialen Oberfläche der zweiten Verlängerungssektion (422) durch P3 dargestellt wird und der Endpunkt des Profils der äußeren radialen Oberfläche der zweiten Verlängerungssektion (422) abseits des Grundkörperabschnitts (41) durch P4 dargestellt wird; und
der Winkel zwischen der Verbindungslinie P2 und P3 und das Profil der äußeren radialen Oberfläche des Grundkörperabschnitts (41) kleiner ist als der Winkel zwischen der Linie, die P3 und P4 verbindet, und dem Profil der äußeren radialen Oberfläche des Grundkörperabschnitts (41).
